# EUROPEAN PATENT APPLICATION

(11) **EP 4 369 531 A1**
(43) Date of publication of application: **15.05.2024**
(21) Application number: 23207426.0
(22) Date of filing: 02.11.2023
(51) Int. Cl.: H01R 13/645, H01R 27/02

(54) **MECHANICAL SECONDARY KEY FOR HIGH-SPEED DATA CONNECTOR**

(30) Priority: 14.11.2022 US 202217986220
(71) Applicant: Rockwell Automation Technologies, Inc., Mayfield Heights, OH 44124 (US)
(72) Inventor: Jones, Cameron E., Mayfield Heights, 44124 (US); Estanek, Brian T., Mayfield Heights, 44124 (US); Yan, Bing, 680529 Singapore (SG); Chui, Gaston Kin Loong, 164025 Singapore (SG)
(74) Representative: Grünecker Patent- und Rechtsanwälte PartG mbB

(57) **Abstract**

A high-speed data cable includes first and second electrical connectors at each end of the cable. A first connector housing is mounted on the first electrical connector, and a second connector housing is mounted on the second electrical connector. The first connector housing includes a first outer periphery and a first mechanical key on the first outer periphery. The first mechanical key engages a first complementary key on a first housing for a first device to define a single orientation by which the first electrical connector plugs into the first device. The second connector housing includes a second outer periphery and a second mechanical key on the second outer periphery. The second mechanical key engages a second complementary key on a second housing for a second device to define a single orientation by which the second electrical connector plugs into the second device.

## Description

### BACKGROUND INFORMATION

The subject matter disclosed herein relates to a mechanical keying feature for high-speed data cables. More specifically, a secondary, mechanical key is provided on a housing for each end of the data cable, where the mechanical key on the housing is independent of the electrical connector on which the housing is being applied.

As is known to those skilled in the art, electrical connectors are commonly constructed according to a standard specification. This standard allows devices from different manufacturers to communicate with each other via a common hardware connection. In some applications, however, the number of devices communicating via connectors constructed according to the standard specification is increasing. Further, some devices may utilize a particular connector for transmitting data via a first protocol, and other devices may utilize the same connector for transmitting data via a second protocol. The potential exists for a cable, intended to run between two particular devices, to be connected incorrectly to another device. This misconnection will, at a minimum, result in a failure of communication between the two devices to which the cable was intended to be connected. The potential also exists that data and/or voltages transmitted according to one protocol may result in damage to a communication interface configured to transmit via another protocol. A misconnection in this instance could result in physical damage to one or both devices to which the cable is connected.

Thus, it would be desirable to provide a system to guide the connection of high-speed data cables between the correct devices.

### BRIEF DESCRIPTION

According to one embodiment of the invention, a data cable includes multiple conductors extending between a first end and a second end of the data cable, a first electrical connector, a second electrical connector, a first connector housing, and a second connector housing. The first electrical connector includes multiple terminals, where each terminal is electrically connected to at least one of the conductors at the first end of the data cable, and a first mechanical key configured to engage a first complementary key in a first socket for the first electrical connector. The first mechanical key engaging the first complementary key defines an orientation in which the first electrical connector engages the first socket. The second electrical connector includes multiple terminals, where each terminal is electrically connected to at least one of the conductors at a second end of the data cable, and a second mechanical key configured to engage a second complementary key in a second socket for the second electrical connector. The second mechanical key engaging the second complementary key defines an orientation in which the second electrical connector engages the second socket. The first connector housing is mounted on the first electrical connector and includes a third mechanical key configured to engage a third complementary key on a first device housing. The first socket is mounted within an opening on the first device housing. The second connector housing is mounted on the second electrical connector and includes a fourth mechanical key configured to engage a fourth complementary key on a second device housing. The second socket is mounted within an opening on the second device housing. The first mechanical key must correspond to the first complementary key and the third mechanical key must correspond to the third complementary key for the first electrical connector to be inserted into the first socket, and the second mechanical key must correspond to the second complementary key and the fourth mechanical key must correspond to the fourth complementary key for the second electrical connector to be inserted into the second socket.

According to another embodiment of the invention, a data cable includes multiple conductors extending between a first end and a second end of the data cable, a first electrical connector, and a second electrical connector. The first electrical connector has multiple terminals, where each terminal is electrically connected to at least one of the conductors at the first end of the data cable. The second electrical connector has multiple terminals, where each terminal is electrically connected to at least one of the conductors at a second end of the data cable. A first connector housing is mounted on the first electrical connector, and a second connector housing is mounted on the second electrical connector. The first connector housing includes a first outer periphery and a first mechanical key on the first outer periphery. The first mechanical key engages a first complementary key on a first housing for a first device to define a single orientation by which the first electrical connector plugs into the first device. The second connector housing includes a second outer periphery and a second mechanical key on the second outer periphery. The second mechanical key engages a second complementary key on a second housing for a second device to define a single orientation by which the second electrical connector plugs into the second device.

According to still another embodiment of the invention, a system for data communication includes a first device, a second device, and a first and second data cable extending between the first and second devices. The first device includes a first housing having a first opening and a second opening. The first opening has a first periphery, the second opening has a second periphery, and the first periphery has a different geometry than the second periphery. A first electrical connector is mounted within the first device and aligned with the first opening. A second electrical connector is mounted within the first device and aligned with the second opening. The second device includes a second housing having a third opening and a fourth opening. The third opening has a third periphery, the fourth opening has a fourth periphery, and the third periphery has a different geometry than the fourth periphery. A third electrical connector is mounted within the second device and aligned with the third opening. A fourth electrical connector is mounted within the second device and aligned with the fourth opening. Each of the first and second data cables include multiple conductors extending between a first end and a second end, a first electrical connector, and a second electrical connector. The first electrical connector has multiple terminals, where each terminal is electrically connected to at least one of the conductors at the first end. The second electrical has multiple terminals, where each terminal is electrically connected to at least one of the conductors at a second end. A first connector housing is mounted on the first electrical connector, and a second connector housing is mounted on the second electrical connector. The first connector housing includes a first outer periphery, where a geometry of the first outer periphery is complementary to the geometry of the first periphery, the second periphery, the third periphery, or the fourth periphery. The second connector housing includes a second outer periphery, where a geometry of the second outer periphery is complementary to the geometry of the first periphery, the second periphery, the third periphery, or the fourth periphery.

These and other advantages and features of the invention will become apparent to those skilled in the art from the detailed description and the accompanying drawings. It should be understood, however, that the detailed description and accompanying drawings, while indicating preferred embodiments of the present invention, are given by way of illustration and not of limitation. Many changes and modifications may be made within the scope of the present invention without departing from the spirit thereof, and the invention includes all such modifications.

### BRIEF DESCRIPTION OF THE DRAWINGS

Various exemplary embodiments of the subject matter disclosed herein are illustrated in the accompanying drawings in which like reference numerals represent like parts throughout, and in which:
FIG. 1 is a perspective view of a high-speed data cable plugged into a device where the cable and device incorporate one embodiment of the invention;
FIG. 2 is a perspective view of a housing for the device of Fig. 1;
FIG. 3 is a partial front elevation of the housing of Fig. 2;
FIG. 4 is a perspective view of one end of the high-speed data cable of Fig. 1;
FIG. 5 is a front elevation view of the high-speed data cable of Fig. 4;
FIG. 6 is a side elevation view of the high-speed data cable of Fig. 4;
FIG. 7 is a perspective view of a housing for another device incorporating a different mechanical key;
FIG. 8 is a partial front elevation of the housing of Fig. 7;
FIG. 9 is a perspective view of one end of a high-speed data cable with a complementary mechanical key for the housing of Fig. 7;
FIG. 10 is a front elevation view of the high-speed data cable of Fig. 9;
FIG. 11 is a side elevation view of the high-speed data cable of Fig. 9; and
FIG. 12 is a perspective view of a device housing with two different openings where one opening has a complementary mechanical key to the high-speed data cable of Fig. 4 and the other opening has a complementary mechanical key to the high-speed data cable of Fig. 9.

In describing the various embodiments of the invention which are illustrated in the drawings, specific terminology will be resorted to for the sake of clarity. However, it is not intended that the invention be limited to the specific terms so selected and it is understood that each specific term includes all technical equivalents which operate in a similar manner to accomplish a similar purpose. For example, the word "connected," "attached," or terms similar thereto are often used. They are not limited to direct connection but include connection through other elements where such connection is recognized as being equivalent by those skilled in the art.

### DETAILED DESCRIPTION

The various features and advantageous details of the subject matter disclosed herein are explained more fully with reference to the non-limiting embodiments described in detail in the following description.

The subject matter disclosed herein describes a system to guide the connection of high-speed data cables between the correct devices utilizing a mechanical key, independent of the electrical connector on each end of the data cable, to prevent incorrect installation of the data cables. The high-speed data cable may initially be constructed according to the electrical requirements for the particular cable. The cable may be, for example, an Ethernet cable, a Universal Serial Bus (USB) cable, a High Definition Multimedia Interface (HDMI) cable, or a cable built according to the Institute of Electrical and Electronics Engineers (IEEE) 1394 standard. Each of these standards defines how an electrical connector for the respective high-speed cable is to be constructed. An external connector housing is then fit around the electrical connector on each end of the data cable. The external connector housing includes a mechanical key formed on the connector housing. Further, the connector housing on each end of the data cable may include a different construction such that each connector housing has a different mechanical key formed in the housing.

The housing of the device to which the cable is to be plugged has a complementary construction to the external connector housings. Each opening in a device housing is configured to receive only one of the mechanical keys from the connector housings, such that only one end of the cable may be plugged into a connector positioned in the opening on the device housing. In addition, the shape of the mechanical key and complementary configuration of the device housing is shaped such that a standard cable housing used for the respective high-speed data cables does not fit into the opening on the device housing, preventing replacement of the custom cable having the secondary mechanical keys with a standard high-speed data cable.

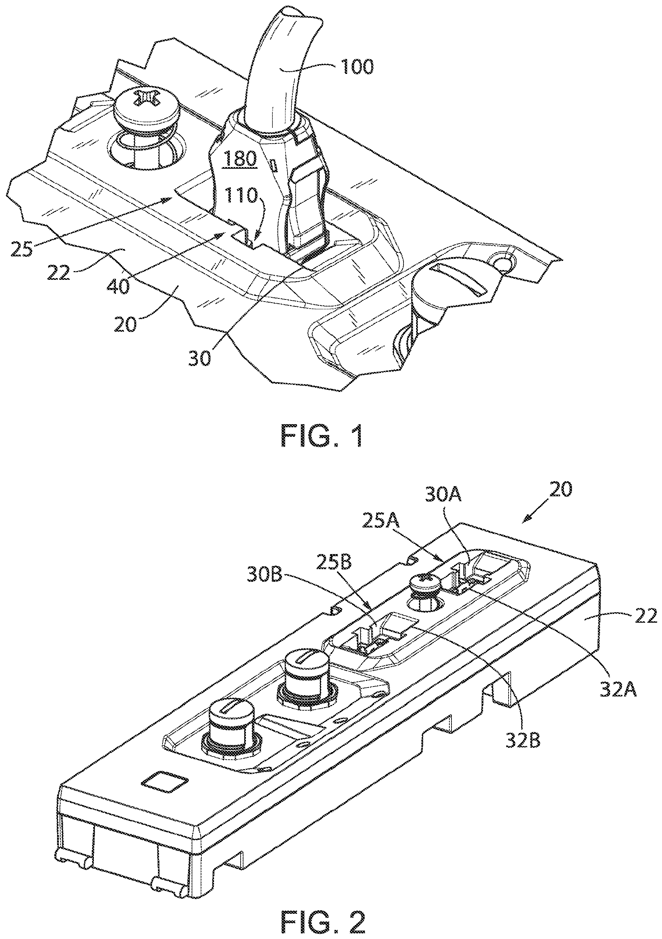

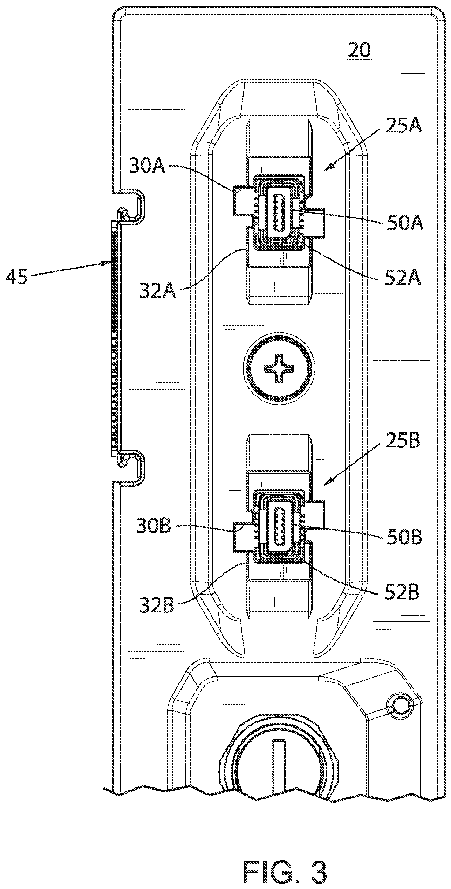

Turning initially to Fig. 1, an exemplary device 20 has a cable 100 plugged into a port 25 on the device 20. For convenience herein, the term device 20 will be used generally herein to identify any device that utilizes one of the connectors discussed herein. According to one aspect of the invention, the device 20 is a module used in an industrial control system. The device 20 may be an industrial controller, such as a programmable logic controller (PLC), a process automation controller (PAC), an edge controller, a networking module connected to one of the controllers, a gateway, an Input/Output (I/O) adapter, a motor drive, or any other device that may communicate within the industrial control system via a standard network, an industrial network, a dedicated communication bus, a backplane, or the like. Each port 25 includes an electrical connector 50 (see also Fig. 3) mounted within the device 20 and positioned at an opening 30 in a housing 22 for the device 20. A mechanical key 110 on the connector housing 180 is configured to engage a complementary key 40 on the device housing 22 to ensure the correct plug is inserted into each electrical connector 50.

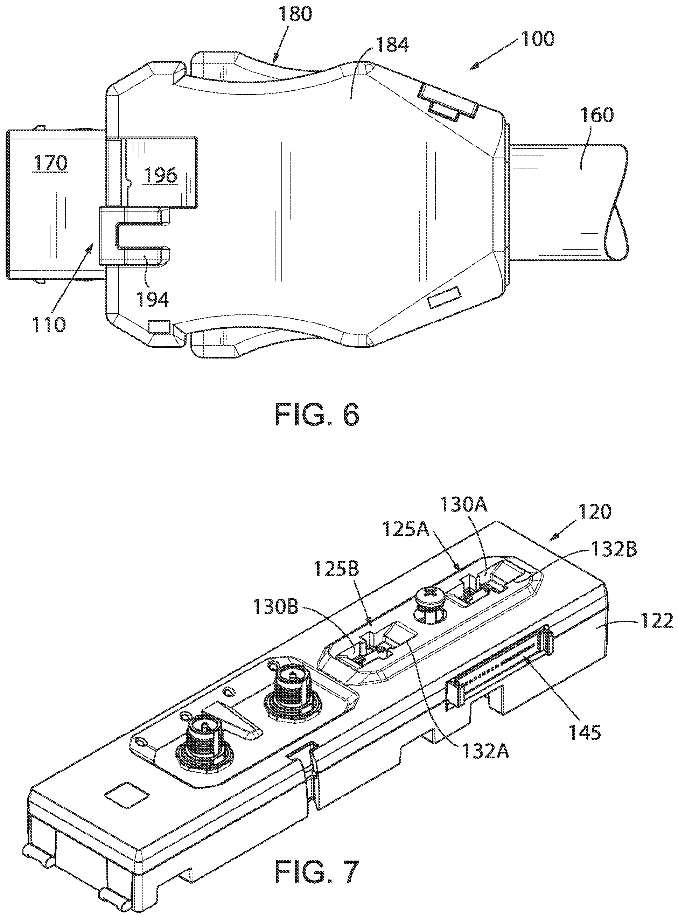

With reference also to Figs. 2-3, a device 20 incorporating one embodiment of the present invention is a dual backplane module for an industrial control system. A first dual backplane module 20 is mounted at a first location within a control cabinet and may be directly connected by a side connector 45 to other modules in the control cabinet. A second dual backplane module 120, as shown in Figs 7-8, is mounted at a second location within the control cabinet and is similarly connected by a side connector 145 to other modules at the second location. High-speed data cables 100 are connected between the first dual backplane module 20 and the second dual backplane module 120 to establish a redundant backplane between the modules 20, 120 mounted at the first location and at the second location within the control cabinet. If both plugs for the high-speed data cables are identical, the potential exists for the first port 25A on the first dual backplane module 20 to be inadvertently connected to the second port 125B of the second dual backplane module 120, and, likewise, the second port 25B on the first dual backplane module 20 may be inadvertently connected to the first port 125A on the second dual backplane module 120. The mechanical key system according to the present invention ensures correct connection of high-speed data cables 100 between the two modules.

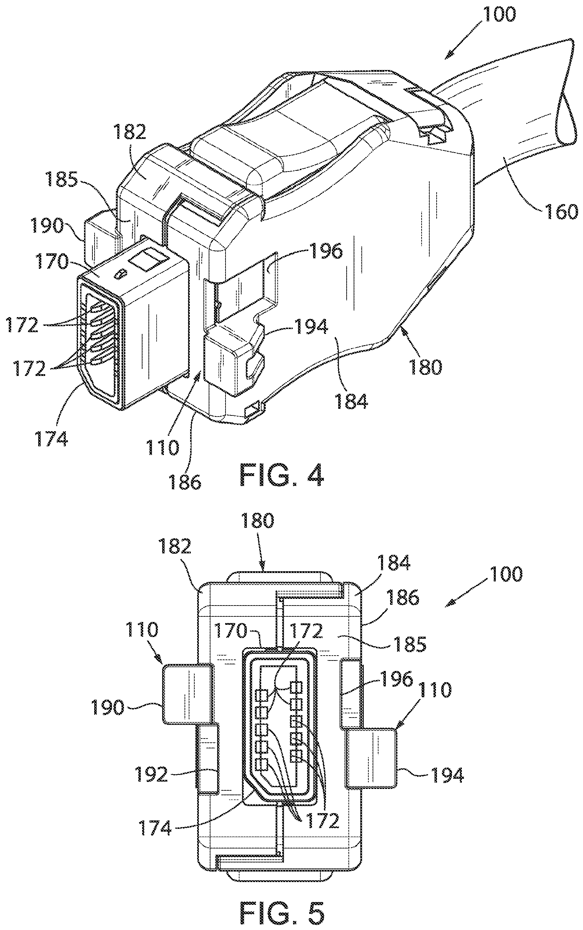

With reference next to Figs 4-6, a first end of the high-speed data cable 100 is illustrated with a first electrical connector 170 and a first connector housing 180 mounted on the first electrical connector. The high-speed data cable 100 includes a cable portion 160, where the cable portion includes multiple conductors contained within an external jacket surrounding the conductors. The high-speed data cable 100 may have a varying number of conductors within the cable according to the application requirements. The high-speed data cable 100 may also include a braided shield around the bundle of conductors and within the jacket, a shield conductor extending the length of the cable, or a combination thereof.

The first electrical connector 170 is connected to the conductors at the first end of the cable 100. The first electrical connector 170 includes multiple terminals 172 to which one of the conductors is electrically connected. The configuration of the first electrical connector 170 may be defined according to the type of cable being used. Further, the first electrical connector 170 may include a first mechanical key 174 included in the electrical connector. According to the illustrated embodiment, an outer periphery of the first electrical connector 170 is generally rectangular with a first long side, a second long side, a first short side, and a second short side. The first mechanical key 174 is defined on one corner of the outer periphery between one short side and one long side. The first mechanical key 174 is an additional side surface between the short side and the long side on the outer periphery, creating a five-sided periphery and creating an asymmetry in the outer periphery of the electrical connector 170.

With reference again to Fig. 3, a complementary electrical socket 50, configured to receive the first electrical connector 170, includes a similarly constructed five-sided periphery defining an orientation in which the first electrical connector 170 fits into the complementary electrical socket. According to the illustrated embodiment, the electrical socket 50 includes a complementary keyed corner 52 to the keyed corner 174 of the first electrical connector 170. As further illustrated in Fig 3, identical electrical connectors 50 are utilized in each port 25 of the illustrated device 20. A first electrical socket 50A is mounted in the first opening 30A for the first port 25A, and a second electrical socket 50B is mounted in the second opening 30B for the second port 25B. Thus, the mechanical key 174 on the connector 170 and the complementary mechanical key 52 on the socket 50 will provide an orientation for the connector 170 to be inserted into the socket 50. However, without the connector housing 180, an electrical connector 170 for a data cable 100 intended for the first port 25A could be inserted into the second port 25B and a data cable 100 intended for the second port 25B could be inserted into the first port 25A.

Referring again to Figs 4-6, a first connector housing 180 is mounted on the electrical connector 170 for the first end of the data cable 100, where the first connector housing 180 is configured to define the port 25 into which the first end of the high-speed data cable 100 is inserted. The first connector housing 180 includes a first housing member 182 and a second housing member 184. The first housing member 182 and the second housing member 184 fit around the electrical connector 170 on the first end of the cable and clip together. The two housing members 182, 184, when connected, define a front surface 185 for the first connector housing 180 proximate the electrical connector 170 at the first end of the high-speed data cable 100. An outer periphery 186 of the front surface 185 includes at least one protrusion and/or at least one recess. The at least one protrusion and/or at least one recess define a secondary, mechanical key 110 for the first end of the data cable 100.

According to the illustrated embodiment, the first housing member 182 includes a protrusion 190 extending outward from a side surface of the first housing member and a recess 192 extending inward to the side surface of the first housing member. The second housing member 184 also includes a protrusion 194 extending outward from a side surface of the second housing member and a recess 196 extending inward to the side surface of the second housing member. With reference to Fig. 5, the first protrusion 190 is positioned above the first recess 192 on the first housing member 182. The second protrusion 194 is positioned below the second recess 196 on the second housing member 184. It is noted that terms such as above, below, upper, lower, right, left, and the like are used with respect to the illustrated embodiment and are not intended to be limiting. It is understood that the end of the cable 100 may be rotated in different orientations and the relative positions will change accordingly.

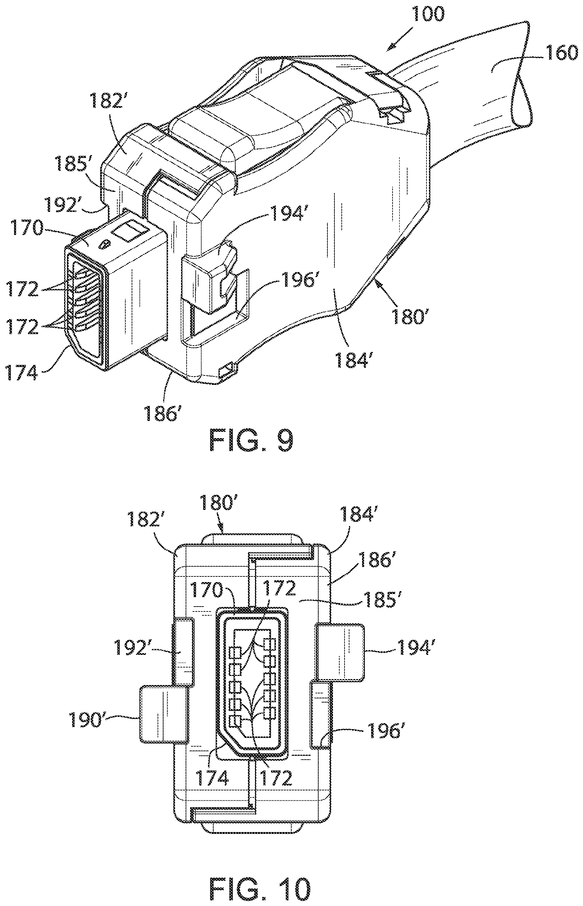

Referring next to Figs 9-11, a second connector housing 180' is shown mounted on the electrical connector 170' at the second end of the cable 100, where the second connector housing 180' is similarly configured to define the port 125 into which the second end of the high-speed data cable 100 is inserted. The second connector housing 180' includes a first housing member 182' and a second housing member 184'. The first housing member 182' and the second housing member 184' fit around the electrical connector 170' on the second end of the cable and clip together. The two housing members 182', 184', when connected, define a front surface 185' for the second connector housing 180' proximate the electrical connector 170' at the second end of the high-speed data cable 100. An outer periphery 186' of the front surface 185' includes at least one protrusion and/or at least one recess. The at least one protrusion and/or at least one recess define a secondary, mechanical key 110 for the second end of the data cable 100.

According to the illustrated embodiment, the second housing member 182' includes a protrusion 190' extending outward from a side surface of the second housing member and a recess 192' extending inward to the side surface of the second housing member. The second housing member 184' also includes a protrusion 194' extending outward from a side surface of the second housing member and a recess 196' extending inward to the side surface of the second housing member. With reference to Fig. 10, the first recess 192' is positioned above the first protrusion 190' on the first housing member 182'. The second recess 196' is positioned below the second protrusion 194' on the second housing member 184'. Thus, mechanical key 110 defined by the outer periphery 186' of the second connector housing 180' is different than the mechanical key 110 defined by the outer periphery 186 of the first connector housing 180.

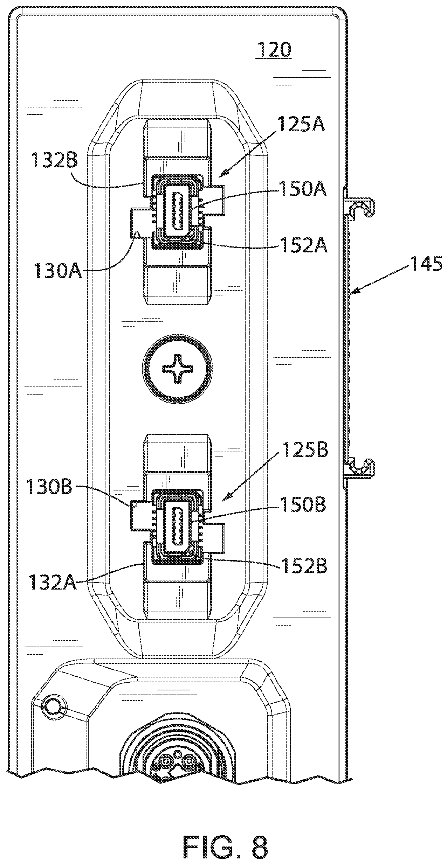

In operation, having a different geometry for the first outer periphery 186 of the first connector housing 180 than the second outer periphery 186' of the second connector housing 180' aids in connecting the high-speed data cables 100 into the right ports 25, 125 of each device 20, 120. With reference again to Figs. 2 and 3, the first dual backplane module 20 includes a first port 25A and a second port 25B. The first port 25A is provided for the first backplane, and the second port 25B is provided for the second backplane. Similarly, the second dual backplane module 120, shown in Figs. 7 and 8, includes a first port 125A and a second port 125B. The first port 125A is provided for the first backplane, and the second port 125B is provided for the second backplane. In order to connect the two backplanes between the first and second backplane modules, a first high-speed data cable 100 is connected between the first port 25A of the first backplane module 20 and the first port 125A of the second backplane module 120, and a second high-speed data cable 100 is connected between the second port 25B of the first backplane module 20 and the second port 125B of the second backplane module 120. Each end of the high-speed data cables 100 includes an electrical connector 170 having the same construction with a first connector housing 180 mounted around the electrical connector 170 at one end of the cable and a second connector housing 180' mounted around the electrical connector 170 at the other end of the cable.

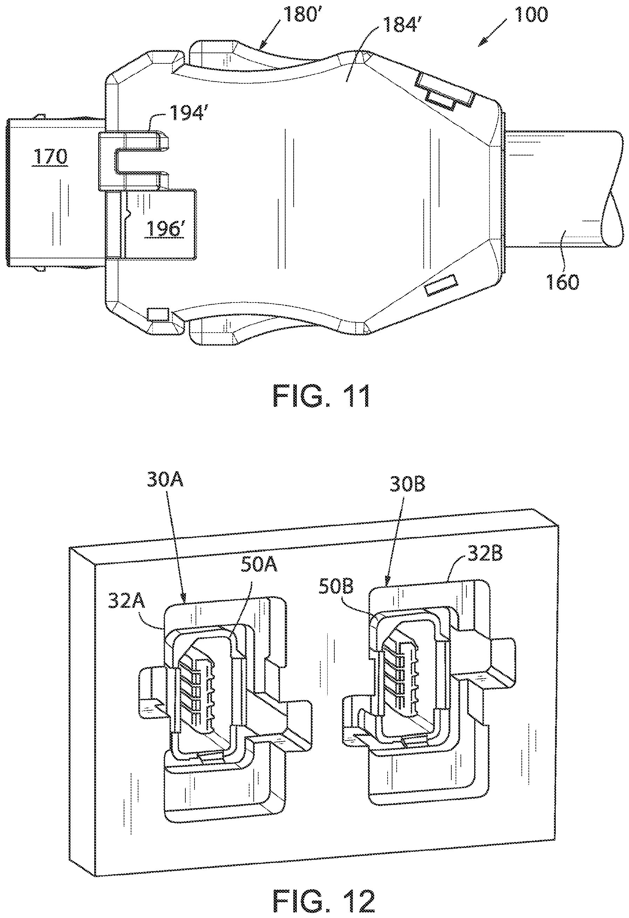

With reference again to Figs. 2 and 3, it is noted that the first opening 30A for the first port 25A on the first backplane module 20 has a first inner periphery 32A, and the second opening 30B for the second port 25B has a second inner periphery 32B. With reference also to Figs. 7 and 8, it is noted that the first opening 130A for the first port 125A on the second backplane module 120 has an inner periphery 132B, and the second opening 130B for the second port 125B has an inner periphery 132A. The inner periphery 132B for the first opening 130A of the second backplane module 120 has the same geometry as the inner periphery 32B for the second opening 30B of the first backplane module 20, and the inner periphery 132A for the second opening 130B of the second backplane module 120 has the same geometry as the inner periphery 32A for the first opening 30A of the first backplane module 20. For ease of comparison, the inner peripheries 32A, 32B of each of the openings 30A, 30B of the first backplane module are illustrated in a side-by-side comparison in Fig. 12.

The configuration of the inner peripheries of the openings on the two backplane modules ensure that two high-speed data cables connected between the two backplane modules are properly connected. Each high-speed data cable 100 includes a first connector housing 180 mounted around the electrical connector 170 at one end of the cable and a second connector housing 180' mounted around the electrical connector 170 at the other end of the cable. Each backplane module 20, 120 includes one port 25, 125 having an inner periphery 32, 132 configured to receive the first connector housing 180 and one port having an inner periphery configured to receive the second connector housing 180'. Thus, only one end the high-speed data cable 100 may be connected into each port 25, 125 on the backplane modules 20, 120. During installation, two high-speed data cables 100 may first be plugged into the first backplane module 20. The first connector housing 180 on a first cable 100 is plugged into the first port 25A of the first backplane module 20 and the second connector housing 180' on the second cable 100 is plugged into the second port 25B of the first backplane module 20. When the two cables 100 are extended over to the second backplane module 120, the first cable 100 has the second connector housing 180' available and the second cable 100 has the first connector housing 180 available. With the reversal of the geometries of the first and second ports between the two backplane modules, the second connector housing 180' of the first cable is only able to plug into the first port 125A of the second backplane module 120, and the first connector housing 180 of the second cable is only able to plug into the second port 125B of the second backplane module 120, thereby properly connecting the two first ports 25A, 125A and the two second ports 25B, 125B together. As a result of the secondary, mechanical keying arranged on the connector housing and on the device housing, the same cable may be provided for both backplanes, yet ensure that the first and second backplanes in each module will always be connected to the respective first and second backplanes in the other module.

The illustrated embodiment includes a single data cable 100 used for both backplane connections, where each end of the data cable 100 has a connector housing 180, 180' with a different mechanical key 110 defined by the outer periphery. According to other aspects of the invention, two devices may include other communication buses between the devices, such as a single backplane and an industrial network. The electrical connections of each cable 100 may still be the same. However, in this application, each connector housing on each end of the cable may be different and the complementary openings 30, 130 in each device may similarly be different. The outer peripheries of the connector housings may define four distinct mechanical keys configured to be inserted into four distinct openings, such that the cables 100 can only be connected in a desired configuration. Further, the illustrated embodiment of two protrusions and two recesses on each outer periphery is exemplary only and is not intended to be limiting. It is contemplated, that the number and/or shape of protrusions and/or recesses arranged on each connector housing 180 may vary to provide different mechanical keys 110 between the connector housings and device housings.

It should be understood that the invention is not limited in its application to the details of construction and arrangements of the components set forth herein. The invention is capable of other embodiments and of being practiced or carried out in various ways. Variations and modifications of the foregoing are within the scope of the present invention. It also being understood that the invention disclosed and defined herein extends to all alternative combinations of two or more of the individual features mentioned or evident from the text and/or drawings. All of these different combinations constitute various alternative aspects of the present invention. The embodiments described herein explain the best modes known for practicing the invention and will enable others skilled in the art to utilize the invention.

In the preceding specification, various embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

### Embodiments

Embodiment 1: A data cable, comprising:
a plurality of conductors extending between a first end and a second end of the data cable;
a first electrical connector including:
   a plurality of terminals, wherein each of the plurality of terminals is electrically connected to at least one of the plurality of conductors at the first end of the data cable, and
   a first mechanical key configured to engage a first complementary key in a first socket for the first electrical connector, wherein the first mechanical key engaging the first complementary key defines an orientation in which the first electrical connector engages the first socket;
a second electrical connector including:
   a plurality of terminals, wherein each of the plurality of terminals is electrically connected to at least one of the plurality of conductors at a second end of the data cable, and
   a second mechanical key configured to engage a second complementary key in a second socket for the second electrical connector, wherein the second mechanical key engaging the second complementary key defines an orientation in which the second electrical connector engages the second socket;
a first connector housing mounted on the first electrical connector, the first connector housing including a third mechanical key configured to engage a third complementary key on a first device housing, wherein the first socket is mounted within an opening on the first device housing; and
a second connector housing mounted on the second electrical connector, the second connector housing including a fourth mechanical key configured to engage a fourth complementary key on a second device housing, wherein the second socket is mounted within an opening on the second device housing, wherein:
   the first mechanical key must correspond to the first complementary key and the third mechanical key must correspond to the third complementary key for the first electrical connector to be inserted into the first socket, and
   the second mechanical key must correspond to the second complementary key and the fourth mechanical key must correspond to the fourth complementary key for the second electrical connector to be inserted into the second socket.

Embodiment 2: The data cable of embodiment 1, wherein the third mechanical key is different than the fourth mechanical key.

Embodiment 3: The data cable of embodiment 2, wherein the first mechanical key is identical to the second mechanical key.

Embodiment 4: The data cable of embodiment 1, wherein:
the first connector housing includes a first outer periphery and at least one first protrusion extending from the first outer periphery,
the at least one first protrusion defines the third mechanical key on the first connector housing,
the second connector housing includes a second outer periphery and at least one second protrusion extending from the second outer periphery, and
the at least one second protrusion defines the fourth mechanical key on the second connector housing.

Embodiment 5: The data cable of embodiment 4, wherein:
the first connector housing further includes at least one first recess on the first outer periphery,
the at least one first protrusion and the at least one first recess define the third mechanical key on the first connector housing,
the second connector housing further includes at least one second recess on the second outer periphery, and
the at least one second protrusion and the at least one second recess define the fourth mechanical key on the second connector housing.

Embodiment 6: The data cable of embodiment 1, wherein:
the first connector housing includes at least a first housing member and a second housing member, wherein the first and second housing members of the first connector housing are connected around the first electrical connector, and
the second connector housing includes at least a first housing member and a second housing member, wherein the first and second housing members of the second connector housing are connected around the second electrical connector.

Embodiment 7: The data cable of embodiment 6, wherein:
the first connector housing includes a first protrusion and a first recess on the first housing member of the first connector housing,
the first connector housing includes a second protrusion and a second recess on the second housing member of the first connector housing,
the second connector housing includes a third protrusion and a third recess on the first housing member of the second connector housing,
the second connector housing includes a fourth protrusion and a fourth recess on the second housing member of the second connector housing, and
the arrangement of the first and second protrusions and recesses on the first connector housing is different than the arrangement of the third and fourth protrusions and recesses on the second connector housing.

Embodiment 8: A data cable, comprising:
a plurality of conductors extending between a first end and a second end of the data cable;
a first electrical connector including a plurality of terminals, wherein each of the plurality of terminals is electrically connected to at least one of the plurality of conductors at the first end of the data cable;
a second electrical connector including a plurality of terminals, wherein each of the plurality of terminals is electrically connected to at least one of the plurality of conductors at a second end of the data cable;
a first connector housing mounted on the first electrical connector, wherein the first connector housing includes:
   a first outer periphery, and
   a first mechanical key on the first outer periphery, wherein the first mechanical key engages a first complementary key on a first housing for a first device to define a single orientation by which the first electrical connector plugs into the first device; and
   a second connector housing mounted on the second electrical connector, wherein the second connector housing includes:
      a second outer periphery, and
      a second mechanical key on the second outer periphery, wherein the second mechanical key engages a second complementary key on a second housing for a second device to define a single orientation by which the second electrical connector plugs into the second device.

Embodiment 9: The data cable of embodiment 8, wherein the first mechanical key is different than the second mechanical key.

Embodiment 10: The data cable of embodiment 8, wherein:
the first connector housing includes at least one first protrusion extending from the first outer periphery,
the at least one first protrusion defines the first mechanical key on the first connector housing,
the second connector housing includes at least one second protrusion extending from the second outer periphery, and
the at least one second protrusion defines the second mechanical key on the second connector housing.

Embodiment 11: The data cable of embodiment 10, wherein:
the first connector housing further includes at least one first recess on the first outer periphery,
the at least one first protrusion and the at least one first recess define the first mechanical key on the first connector housing,
the second connector housing further includes at least one second recess on the second outer periphery, and
the at least one second protrusion and the at least one second recess define the second mechanical key on the second connector housing.

Embodiment 12: The data cable of embodiment 8, wherein:
the first connector housing includes at least a first housing member and a second housing member, wherein the first and second housing members of the first connector housing are connected around the first electrical connector, and
the second connector housing includes at least a first housing member and a second housing member, wherein the first and second housing members of the second connector housing are connected around the second electrical connector.

Embodiment 13: The data cable of embodiment 8, wherein:
the first electrical connector includes a third mechanical key configured to engage a third complementary key in a first socket for the first electrical connector,
the second electrical connector includes a fourth mechanical key configured to engage a fourth complementary key in a second socket for the second electrical connector,
the first mechanical key must correspond to the first complementary key and the third mechanical key must correspond to the third complementary key for the first electrical connector to be inserted into the first socket, and
the second mechanical key must correspond to the second complementary key and the fourth mechanical key must correspond to the fourth complementary key for the second electrical connector to be inserted into the second socket.

Embodiment 14: The data cable of embodiment 13, wherein:
the first mechanical key is different than the second mechanical key, and
the third mechanical key is identical to the fourth mechanical key.

Embodiment 15: A system for data communication, the system comprising:
a first device, including:
   a first housing having a first opening and a second opening, wherein:
   the first opening has a first periphery,
   the second opening has a second periphery, and
   the first periphery has a different geometry than the second periphery,
a first electrical connector mounted within the first device and aligned with the first opening, and
a second electrical connector mounted within the first device and aligned with the second opening;
   a second device, including:
   a second housing having a third opening and a fourth opening, wherein:
      the third opening has a third periphery,
      the fourth opening has a fourth periphery, and
      the third periphery has a different geometry than the fourth periphery,
a third electrical connector mounted within the second device and aligned with the third opening, and
a fourth electrical connector mounted within the second device and aligned with the fourth opening;
a first data cable and a second data cable, wherein each of the first and second data cables include:
   a plurality of conductors extending between a first end and a second end;
   a first electrical connector including a plurality of terminals, wherein each of the plurality of terminals is electrically connected to at least one of the plurality of conductors at the first end;
   a second electrical connector including a plurality of terminals, wherein each of the plurality of terminals is electrically connected to at least one of the plurality of conductors at a second end;
   a first connector housing mounted on the first electrical connector, wherein the first connector housing includes a first outer periphery, wherein a geometry of the first outer periphery is complementary to the geometry of the first periphery, the second periphery, the third periphery, or the fourth periphery; and
   a second connector housing mounted on the second electrical connector, wherein the second connector housing includes a second outer periphery, wherein a geometry of the second outer periphery is complementary to the geometry of the first periphery, the second periphery, the third periphery, or the fourth periphery.

Embodiment 16: The system of embodiment 15, wherein:
the first periphery of the first opening has the same geometry as the fourth periphery of the fourth opening;
the second periphery of the second opening has the same geometry as the third periphery of the third opening;
the first data cable is configured to be inserted between the first electrical connector and the third electrical connector; and
the second data cable is configured to be inserted between the second electrical connector and the fourth electrical connector.

Embodiment 17: The system of embodiment 15, wherein:
the geometry is different for each of the first periphery, second periphery, third periphery, and fourth periphery;
the first outer periphery of the first data cable is complementary to the first periphery of the first opening;
the second outer periphery of the first data cable is complementary to the third periphery of the third opening;
the first outer periphery of the second data cable is complementary to the second periphery of the second opening; and
the second outer periphery of the second data cable is complementary to the fourth periphery of the fourth opening.

Embodiment 18: The system of embodiment 15, wherein each of the first electrical connector, second electrical connector, third electrical connector, and fourth electrical connector includes an additional mechanical key configured to engage an additional complementary mechanical key located on the first or second electrical connector of the first or second data cable.

Embodiment 19: The system of embodiment 15, wherein:
the first outer periphery of the first electrical connector on each of the first and second data cables includes at least one first protrusion extending from the first outer periphery, and
the second outer periphery of the second electrical connector on each of the first and second data cables includes at least one second protrusion extending from the second outer periphery.

Embodiment 20: The system of embodiment 19, wherein:
the first outer periphery of the first electrical connector on each of the first and second data cables further includes at least one first recess on the first outer periphery, and
the second outer periphery of the second electrical connector on each of the first and second data cables further includes at least one second recess on the second outer periphery.

## Claims

1. A data cable, comprising:
a plurality of conductors extending between a first end and a second end of the data cable;
a first electrical connector including:
a plurality of terminals, wherein each of the plurality of terminals is electrically connected to at least one of the plurality of conductors at the first end of the data cable, and
a first mechanical key configured to engage a first complementary key in a first socket for the first electrical connector, wherein the first mechanical key engaging the first complementary key defines an orientation in which the first electrical connector engages the first socket;
a second electrical connector including:
a plurality of terminals, wherein each of the plurality of terminals is electrically connected to at least one of the plurality of conductors at a second end of the data cable, and
a second mechanical key configured to engage a second complementary key in a second socket for the second electrical connector, wherein the second mechanical key engaging the second complementary key defines an orientation in which the second electrical connector engages the second socket;
a first connector housing mounted on the first electrical connector, the first connector housing including a third mechanical key configured to engage a third complementary key on a first device housing, wherein the first socket is mounted within an opening on the first device housing; and
a second connector housing mounted on the second electrical connector, the second connector housing including a fourth mechanical key configured to engage a fourth complementary key on a second device housing, wherein the second socket is mounted within an opening on the second device housing, wherein:
the first mechanical key must correspond to the first complementary key and the third mechanical key must correspond to the third complementary key for the first electrical connector to be inserted into the first socket, and
the second mechanical key must correspond to the second complementary key and the fourth mechanical key must correspond to the fourth complementary key for the second electrical connector to be inserted into the second socket.

2. The data cable of claim 1, wherein the third mechanical key is different than the fourth mechanical key.

3. The data cable of claim 2, wherein the first mechanical key is identical to the second mechanical key.

4. The data cable of one of claims 1 to 3, wherein:
the first connector housing includes a first outer periphery and at least one first protrusion extending from the first outer periphery,
the at least one first protrusion defines the third mechanical key on the first connector housing,
the second connector housing includes a second outer periphery and at least one second protrusion extending from the second outer periphery, and
the at least one second protrusion defines the fourth mechanical key on the second connector housing.

5. The data cable of claim 4, wherein:
the first connector housing further includes at least one first recess on the first outer periphery,
the at least one first protrusion and the at least one first recess define the third mechanical key on the first connector housing,
the second connector housing further includes at least one second recess on the second outer periphery, and
the at least one second protrusion and the at least one second recess define the fourth mechanical key on the second connector housing.

6. The data cable of one of claims 1 to 5, wherein:
the first connector housing includes at least a first housing member and a second housing member, wherein the first and second housing members of the first connector housing are connected around the first electrical connector, and
the second connector housing includes at least a first housing member and a second housing member, wherein the first and second housing members of the second connector housing are connected around the second electrical connector.

7. The data cable of claim 6, wherein:
the first connector housing includes a first protrusion and a first recess on the first housing member of the first connector housing,
the first connector housing includes a second protrusion and a second recess on the second housing member of the first connector housing,
the second connector housing includes a third protrusion and a third recess on the first housing member of the second connector housing,
the second connector housing includes a fourth protrusion and a fourth recess on the second housing member of the second connector housing, and
the arrangement of the first and second protrusions and recesses on the first connector housing is different than the arrangement of the third and fourth protrusions and recesses on the second connector housing.

8. A data cable, comprising:
a plurality of conductors extending between a first end and a second end of the data cable;
a first electrical connector including a plurality of terminals, wherein each of the plurality of terminals is electrically connected to at least one of the plurality of conductors at the first end of the data cable;
a second electrical connector including a plurality of terminals, wherein each of the plurality of terminals is electrically connected to at least one of the plurality of conductors at a second end of the data cable;
a first connector housing mounted on the first electrical connector, wherein the first connector housing includes:
a first outer periphery, and
a first mechanical key on the first outer periphery, wherein the first mechanical key engages a first complementary key on a first housing for a first device to define a single orientation by which the first electrical connector plugs into the first device; and
a second connector housing mounted on the second electrical connector, wherein the second connector housing includes:
a second outer periphery, and
a second mechanical key on the second outer periphery, wherein the second mechanical key engages a second complementary key on a second housing for a second device to define a single orientation by which the second electrical connector plugs into the second device.

9. The data cable of claim 8, wherein the first mechanical key is different than the second mechanical key.

10. The data cable of claim 8 or 9, wherein:
the first connector housing includes at least one first protrusion extending from the first outer periphery,
the at least one first protrusion defines the first mechanical key on the first connector housing,
the second connector housing includes at least one second protrusion extending from the second outer periphery, and
the at least one second protrusion defines the second mechanical key on the second connector housing; and/or
wherein:
the first connector housing further includes at least one first recess on the first outer periphery,
the at least one first protrusion and the at least one first recess define the first mechanical key on the first connector housing,
the second connector housing further includes at least one second recess on the second outer periphery, and
the at least one second protrusion and the at least one second recess define the second mechanical key on the second connector housing.

11. The data cable of claims 8 to 10, wherein:
the first connector housing includes at least a first housing member and a second housing member, wherein the first and second housing members of the first connector housing are connected around the first electrical connector, and
the second connector housing includes at least a first housing member and a second housing member, wherein the first and second housing members of the second connector housing are connected around the second electrical connector.

12. The data cable of claims 8 to 11, wherein:
the first electrical connector includes a third mechanical key configured to engage a third complementary key in a first socket for the first electrical connector,
the second electrical connector includes a fourth mechanical key configured to engage a fourth complementary key in a second socket for the second electrical connector,
the first mechanical key must correspond to the first complementary key and the third mechanical key must correspond to the third complementary key for the first electrical connector to be inserted into the first socket, and
the second mechanical key must correspond to the second complementary key and the fourth mechanical key must correspond to the fourth complementary key for the second electrical connector to be inserted into the second socket; and/or
wherein:
the first mechanical key is different than the second mechanical key, and
the third mechanical key is identical to the fourth mechanical key.

13. A system for data communication, the system comprising:
a first device, including:
a first housing having a first opening and a second opening, wherein:
the first opening has a first periphery,
the second opening has a second periphery, and
the first periphery has a different geometry than the second periphery,
a first electrical connector mounted within the first device and aligned with the first opening, and
a second electrical connector mounted within the first device and aligned with the second opening;
a second device, including:
a second housing having a third opening and a fourth opening, wherein:
the third opening has a third periphery,
the fourth opening has a fourth periphery, and
the third periphery has a different geometry than the fourth periphery,
a third electrical connector mounted within the second device and aligned with the third opening, and
a fourth electrical connector mounted within the second device and aligned with the fourth opening;
a first data cable and a second data cable, wherein each of the first and second data cables include:
a plurality of conductors extending between a first end and a second end;
a first electrical connector including a plurality of terminals, wherein each of the plurality of terminals is electrically connected to at least one of the plurality of conductors at the first end;
a second electrical connector including a plurality of terminals, wherein each of the plurality of terminals is electrically connected to at least one of the plurality of conductors at a second end;
a first connector housing mounted on the first electrical connector, wherein the first connector housing includes a first outer periphery, wherein a geometry of the first outer periphery is complementary to the geometry of the first periphery, the second periphery, the third periphery, or the fourth periphery; and
a second connector housing mounted on the second electrical connector, wherein the second connector housing includes a second outer periphery, wherein a geometry of the second outer periphery is complementary to the geometry of the first periphery, the second periphery, the third periphery, or the fourth periphery.

14. The system of claim 15, wherein:
the first periphery of the first opening has the same geometry as the fourth periphery of the fourth opening;
the second periphery of the second opening has the same geometry as the third periphery of the third opening;
the first data cable is configured to be inserted between the first electrical connector and the third electrical connector; and
the second data cable is configured to be inserted between the second electrical connector and the fourth electrical connector.

15. The system of claim 13 or 14, wherein:
the geometry is different for each of the first periphery, second periphery, third periphery, and fourth periphery;
the first outer periphery of the first data cable is complementary to the first periphery of the first opening;
the second outer periphery of the first data cable is complementary to the third periphery of the third opening;
the first outer periphery of the second data cable is complementary to the second periphery of the second opening; and
the second outer periphery of the second data cable is complementary to the fourth periphery of the fourth opening; or
wherein each of the first electrical connector, second electrical connector, third electrical connector, and fourth electrical connector includes an additional mechanical key configured to engage an additional complementary mechanical key located on the first or second electrical connector of the first or second data cable; or
wherein:
the first outer periphery of the first electrical connector on each of the first and second data cables includes at least one first protrusion extending from the first outer periphery, and
the second outer periphery of the second electrical connector on each of the first and second data cables includes at least one second protrusion extending from the second outer periphery; and/or
wherein:
the first outer periphery of the first electrical connector on each of the first and second data cables further includes at least one first recess on the first outer periphery, and
the second outer periphery of the second electrical connector on each of the first and second data cables further includes at least one second recess on the second outer periphery.
